# EUROPEAN PATENT APPLICATION

(11) **EP 4 529 001 A1**
(43) Date of publication of application: **26.03.2025**
(21) Application number: 23807277.1
(22) Date of filing: 22.03.2023
(51) Int. Cl.: H02K 13/00, H01R 39/18

(54) **ELECTRIC MOTOR**

(30) Priority: 17.05.2022 JP 2022080794
(71) Applicant: PANASONIC INTELLECTUAL PROPERTY MANAGEMENT CO., LTD., Kadoma-shi Osaka 571-0057 (JP)
(72) Inventor: YOSHIOKA, Yuuki, Osaka 571-0057 (JP)
(74) Representative: SSM Sandmair
(86) International application number: PCT/JP2023/011218
(87) International publication number: WO 2023/223662

(57) **Abstract**

An electric motor includes a rotor including a rotating shaft extending in an axial direction, a commutator that is attached to the rotating shaft, a brush that comes into contact with the commutator, and a brush spring that presses the brush against the commutator. The brush spring includes a first spiral portion and a second spiral portion, each of the first spiral portion and the second spiral portion being made of a plate material having a strip shape wound in a spiral shape, and a coupling portion that couples a wire material having a strip shape forming the first spiral portion and a wire material having a strip shape forming the second spiral portion, and the brush is pressed against the commutator by a load from the coupling portion.

## Description

### TECHNICAL FIELD

The present disclosure relates to an electric motor.

### BACKGROUND ART

Electric motors are widely used not only in the field of home electrical appliances such as vacuum cleaners, but also in the field of electric equipment, such as automobiles. For example, an electric motor is used in an electric air blower mounted on a vacuum cleaner to rotate a rotary fan. In a two-wheeled or four-wheeled vehicle, an electric motor is used to drive a cooling fan such as a radiator.

A brushed electric motor (commutator electric motor) using a brush and a brushless electric motor not using a brush have been known as the electric motor. The brushed electric motor includes a stator, a rotor that rotates by a magnetic force of the stator, a commutator attached to a rotating shaft of the rotor, and a brush in sliding contact with the commutator.

In the brushed electric motor, a brush spring is used to press the brush against the commutator. The brush spring applies pressure to the brush using spring elasticity. In related art, a coil spring or a torsion spring has been used as the brush spring of the brushed electric motor.

However, in the coil spring or the torsion spring, there is a large difference between a pressure (initial pressure) before the brush is worn and a pressure (final pressure) when the electric motor reaches the end of lifespan due to the wear of the brush. Thus, in the coil spring or the torsion spring, it is necessary to set the initial pressure to be high in order to secure a predetermined final pressure or more. Thus, in an initial stage, friction between the brush and the commutator increases during rotation of the rotor, and a sliding loss of the brush may increase. This results in a decrease in efficiency of the electric motor and a decrease in lifespan of the electric motor (lifespan of the brush).

Therefore, in order to reduce the difference between the initial pressure and the final pressure and apply a uniform load (pressure) to the brush, a technique using a constant load spring as the brush spring has been proposed (see, for example, PTL 1). The constant load spring is a spiral spring having a spiral portion in which a wire material having a strip shape is spirally wound. The constant load spring is arranged such that the spiral portion comes into contact with a rear end surface of the brush. As a result, the constant load can be applied to the rear end surface of the brush by the spiral portion by using a force by which the spiral portion returns to an original state when the strip-shaped wire material is stretched from the spiral portion.

However, in the electric motor of the related art using the brush spring having the spiral portion, the spiral portion of the brush spring is arranged behind the rear end surface of the brush in a direction in which the brush moves. Thus, in the electric motor of the related art, it is necessary to shorten a length of the brush by at least a dimension of the spiral portion. Therefore, there is a problem that the lifespan of the electric motor is shortened.

### Citation List

### Patent Literature

PTL 1: Unexamined Japanese Utility Model Publication No. H05-29268

### SUMMARY OF THE INVENTION

The present disclosure has been made to solve such a problem. An object of the present disclosure is to provide a long-lifespan electric motor.

In order to achieve the above object, an aspect of an electric motor according to the present disclosure includes a rotor including a rotating shaft extending in an axial direction, a commutator that is attached to the rotating shaft, a brush that comes into contact with the commutator, and a brush spring that presses the brush against the commutator. The brush spring includes a first spiral portion and a second spiral portion, each of the first spiral portion and the second spiral portion being made of a plate material having a strip shape wound in a spiral shape, and a coupling portion that couples a wire material having a strip shape forming the first spiral portion and a wire material having a strip shape forming the second spiral portion. The brush is pressed against the commutator by a load from the coupling portion.

Preferably, the brush has a front end surface coming into contact with the commutator and a rear end surface positioned on a side opposite to the front end surface. Preferably, the coupling portion comes into contact with a rear end surface of the brush.

Preferably, an end surface of a wire material having a strip shape forming the coupling portion abuts on the rear end surface of the brush.

Preferably, a recess is formed on the rear end surface of the brush, and at least a part of the coupling portion is inserted into the recess.

Preferably, the first spiral portion and the second spiral portion are arranged to sandwich a front end of the brush, the strip-shaped wire material forming the first spiral portion is drawn out along one side surface of the brush, and the strip-shaped wire material forming the second spiral portion is drawn out along an other side surface of the brush.

Preferably, an aspect of the electric motor further includes a brush holder including a brush accommodation portion that accommodates the brush. Preferably, slits extending along a longitudinal direction of the brush are formed on both side surfaces of the brush accommodation portion, and the coupling portion protrudes from the slits.

Preferably, the first spiral portion and the second spiral portion are arranged to sandwich the brush accommodation portion.

Preferably, the first spiral portion and the second spiral portion are fixed to the brush holder.

Preferably, the coupling portion includes a bent segment formed by bending a part of the strip-shaped wire material forming the coupling portion, and the bent segment is in surface contact with the rear end surface of the brush.

Preferably, in a case where a plurality of the bent segments are provided, the plurality of bent segments include a first bent segment and a second bent segment which are bent in opposite directions to each other in a height direction of the brush.

Preferably, the bent segment is formed by bending the coupling portion only in one direction.

Preferably, the coupling portion is shifted from a center of the brush in a height direction.

Preferably, the strip-shaped wire material forming the first spiral portion, the strip-shaped wire material forming the second spiral portion, and the strip-shaped wire material forming the coupling portion are integrated.

In the electric motor according to the present disclosure, it is not necessary to shorten the brush even though the brush spring having the spiral portion is used. Therefore, the electric motor according to the present disclosure can realize the long-lifespan electric motor.

### BRIEF DESCRIPTION OF THE DRAWINGS

Fig. 1 is a sectional view of an electric air blower according to a first exemplary embodiment taken along a plane passing through an axis of a rotating shaft and passing through a pair of brushes.
Fig. 2 is a sectional view of the electric air blower according to the first exemplary embodiment taken along a plane passing through the axis of the rotating shaft and passing through a pair of magnets as a stator.
Fig. 3 is an exploded perspective view of the electric air blower according to the first exemplary embodiment.
Fig. 4 is a sectional view of the electric air blower according to the first exemplary embodiment taken along a plane passing through the pair of brushes and orthogonal to the axis of the rotating shaft.
Fig. 5 is a perspective view of an assembly in which the brush, a brush holder, and a constant load spring are combined in the electric motor according to the first exemplary embodiment as viewed obliquely from the front.
Fig. 6 is a perspective view of the assembly in which the brush, the brush holder, and the constant load spring are combined in the electric motor according to the first exemplary embodiment as viewed obliquely from behind.
Fig. 7 is a diagram illustrating a configuration of the assembly in which the brush, the brush holder, and the constant load spring are combined in the electric motor according to the first exemplary embodiment.
Fig. 8 is a diagram illustrating an example of a connection aspect between the brush and a pigtail wire.
Fig. 9 is a diagram illustrating another example of the connection aspect between the brush and the pigtail wire.
Fig. 10 is a perspective view illustrating a scene when a coupling portion of the constant load spring moves toward a commutator due to wear of the brush in the assembly in which the brush, the brush holder, and the constant load spring are combined.
Fig. 11 is a side view illustrating a scene when the coupling portion of the constant load spring moves toward the commutator due to wear of the brush in the assembly in which the brush, the brush holder, and the constant load spring are combined.
Fig. 12 is a sectional view illustrating a brush and a constant load spring set in a brush holder in an electric motor of the related art.
Fig. 13 is a diagram of a brush and a constant load spring in an electric motor of an example of the related art as viewed from a back side.
Fig. 14 is a perspective view illustrating an assembly in which a brush and a constant load spring are combined in an electric motor according to a second exemplary embodiment.
Fig. 15 is an enlarged sectional view of a connection portion between the brush and the constant load spring in the electric motor according to the second exemplary embodiment.
Fig. 16 is a perspective view illustrating an assembly in which a brush, a brush holder, and a constant load spring are combined in an electric motor according to Modification 1 of the second exemplary embodiment.
Fig. 17 is an enlarged sectional view of a connection portion between the brush and the constant load spring in the electric motor according to Modification 1 of the second exemplary embodiment.
Fig. 18 is a sectional view illustrating configurations of a brush and a constant load spring in an electric motor according to Modification 2 of the second exemplary embodiment.
Fig. 19 is a sectional view illustrating configurations of a brush and a constant load spring in an electric motor according to Modification 3 of the second exemplary embodiment.
Fig. 20 is a diagram illustrating an arrangement example of a brush and a constant load spring in an electric motor according to another modification.

### DESCRIPTION OF EMBODIMENT

Hereinafter, exemplary embodiments of the present disclosure will be described with reference to the drawings. Note that, exemplary embodiments to be described below illustrate specific examples of the present disclosure. Therefore, numerical values, constituent elements, arrangement positions and connection modes of the constituent elements, steps, order of the steps, and the like illustrated in the following exemplary embodiment are merely examples, and are not intended to limit the present disclosure. Thus, among the constituent elements in the following exemplary embodiments, constituent elements that are not described in independent claims indicating the highest concept of the present disclosure are described as optional constituent elements.

In the present specification and the drawings, an X-axis, a Y-axis, and a Z-axis indicate three axes of a three-dimensional orthogonal coordinate system. The X-axis and the Y-axis are axes orthogonal to each other and both orthogonal to the Z-axis. In the present exemplary embodiment, a Z-axis direction is a direction in which axis C of rotating shaft 13 extends.

Each of the drawings is a schematic view and is not necessarily exactly illustrated. In each drawing, substantially the same components as those in other drawings are denoted by the same reference numerals, and redundant description will be omitted or simplified. In the present specification, the terms "upper" and "lower" do not necessarily refer to an upward direction (vertically upward) and a downward direction (vertically downward) in terms of absolute space recognition.

### (First exemplary embodiment)

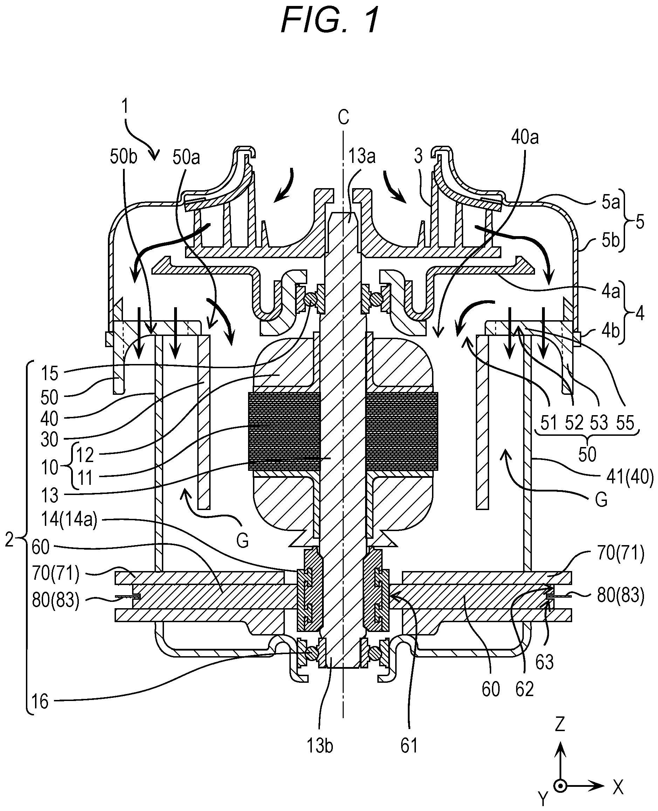

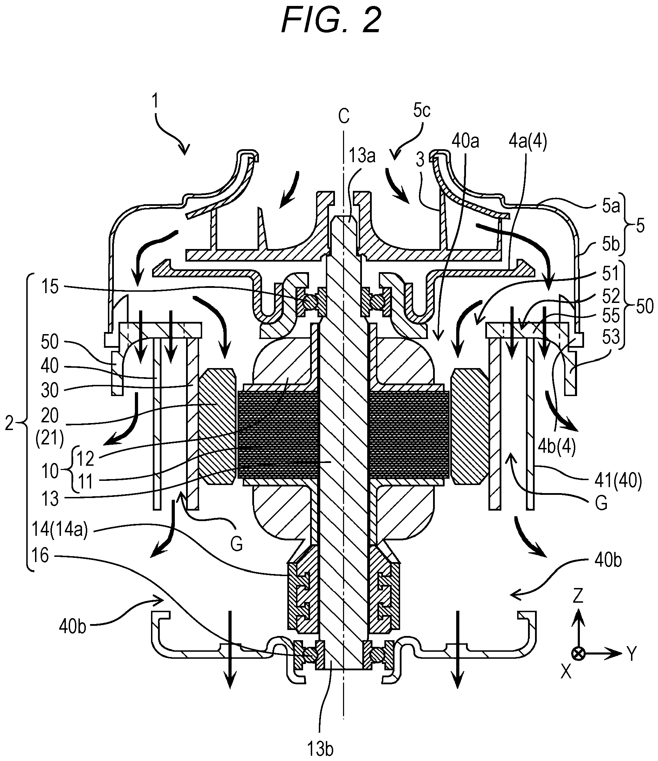

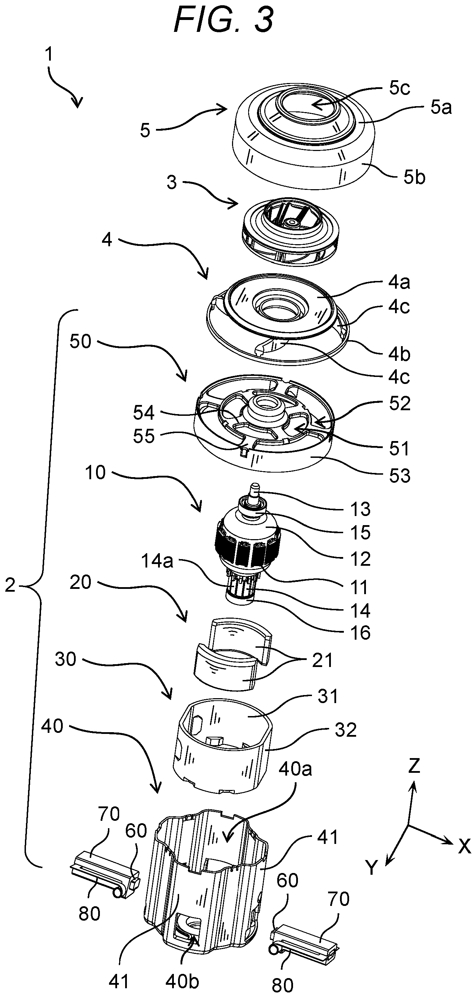

An entire configuration of electric air blower 1 on which electric motor 2 according to a first exemplary embodiment is mounted will be described with reference to Figs. 1 to 3. Fig. 1 is a sectional view (XZ sectional view) of electric air blower 1 according to the first exemplary embodiment taken along a plane passing through axis C of rotating shaft 13 and passing through a pair of brushes 60. Fig. 2 is a sectional view (YZ section) of electric air blower 1 according to the first exemplary embodiment taken along a plane passing through axis C of rotating shaft 13 and passing through a pair of magnets 21 as stators 20. In Figs. 1 and 2, a flow of air flowing into electric air blower 1 when rotary fan 3 rotates is indicated by an arrow. Fig. 3 is an exploded perspective view of electric air blower 1 according to the first exemplary embodiment.

As illustrated in Figs. 1 to 3, electric air blower 1 includes electric motor 2, rotary fan 3, air guide 4, and fan case 5. Electric motor 2 includes rotor 10 and stator 20. Rotary fan 3 is attached to rotating shaft 13 included in electric motor 2. Air discharged from rotary fan 3 flows into air guide 4. Fan case 5 accommodates rotary fan 3. Electric air blower 1 is used, for example, in a vacuum cleaner.

Electric motor 2 is a fan motor that rotates rotary fan 3. As an example, electric motor 2 is a DC electric motor to which a DC power supply is input. Electric motor 2 is a commutator electric motor with a brush.

As illustrated in Figs. 1 to 3, electric motor 2 includes rotor 10, stator 20, yoke 30, frame 40, bracket 50, brush 60, brush holder 70, and constant load spring 80 that is a brush spring. Rotor 10, stator 20, and yoke 30 are arranged in frame 40. A detailed configuration of each member of electric motor 2 will be described below.

Rotary fan 3 sucks air into an outer shell (housing) including frame 40 and fan case 5. As an example, rotary fan 3 is a centrifugal fan that can obtain high suction pressure. Rotary fan 3 rotates, and thus, wind pressure is generated. Air is sucked from inlet port 5c of fan case 5 by the generated wind pressure. The sucked air is discharged from rotary fan 3. The air discharged from rotary fan 3 flows into air guide 4. Rotary fan 3 is made of, for example, a resin material or a metallic material such as aluminum.

As an example, rotary fan 3 includes a first side plate provided with a suction port, a second side plate facing the first side plate across a predetermined gap, and a plurality of fan blades sandwiched between the first side plate and the second side plate. The plurality of fan blades each have a plate shape curved in an arc shape. The plurality of fan blades are arranged radially in such a way as to swirl.

Air guide 4 has a function of forming a flow path of an airflow. For example, air guide 4 commutates and discharges the air sucked from inlet port 5c of fan case 5 by the rotation of rotary fan 3. The air discharged from air guide 4 flows into frame 40 via bracket 50. Note that, the air discharged from air guide 4 is not only discharged to an inside of frame 40 but also discharged to an outside of frame 40 via bracket 50.

Air guide 4 includes main body 4a, ring shape part 4b having an annular shape and surrounding main body 4a with a gap from main body 4a, and a plurality of coupling plates 4c coupling main body 4a and ring shape part 4b. A gap between main body 4a and ring shape part 4b serves as a ventilation path.

Main body 4a is a disk body having a through hole for fixing to bracket 50. Ring shape part 4b functions as a support part that supports an end in the direction (thrust direction) axis C of rotating shaft 13 in side wall portion 5b of fan case 5 extends. Each of the plurality of coupling plates 4c functions as a guide plate for forming the flow path of the airflow. Specifically, the plurality of coupling plates 4c each have a plate shape curved in an arc shape. The plurality of coupling plates 4c are radially arranged in such a way as to swirl outward from the through hole of main body 4a. Air guide 4 is made of, for example, a resin material. However, air guide 4 may be made of a metallic material.

Fan case 5 is a housing that accommodates rotary fan 3. Fan case 5 is a cover that covers rotary fan 3 and air guide 4. As an example, fan case 5 is a metal cover made of a metallic material. However, fan case 5 may be a resin cover made of a resin material.

Fan case 5 has lid portion 5a that covers upper portions of rotary fan 3 and air guide 4, and side wall portion 5b that covers side portions of rotary fan 3 and air guide 4. Fan case 5 has inlet port 5c (suction port) for sucking outside air. Inlet port 5c is a circular through hole provided at the center of lid portion 5a.

Fan case 5 is fixed to bracket 50. Fan case 5 is fixed to bracket 50 via air guide 4. A fan case spacer having an opening corresponding to inlet port 5c may be attached to inlet port 5c of fan case 5.

In electric air blower 1 having the above configuration, when rotor 10 included in electric motor 2 rotates, rotary fan 3 rotates. As a result, in electric air blower 1, the air is sucked into fan case 5 from inlet port 5c of fan case 5. As a result, the air flows into rotary fan 3. The air sucked by rotary fan 3 is compressed to a high pressure by the fan blades included in rotary fan 3. The compressed air is discharged outward in a radial direction from an outer peripheral side portion of rotary fan 3. The air discharged from rotary fan 3 flows into air guide 4 along side wall portion 5b of fan case 5. The air flowing into air guide 4 reaches bracket 50 through the ventilation path of air guide 4.

Part of the air having reached bracket 50 flows into frame 40 via bracket 50. The air having flowed into the frame passes through the inside of frame 40 and is discharged to an outside from exhaust port 40b of frame 40. That is, the air flowing into frame 40 is discharged to an outside of electric air blower 1 while cooling heat generation components (such as winding) of electric motor 2.

On the other hand, another part of the air having reached bracket 50 is directly discharged to the outside of electric air blower 1 via bracket 50 without passing through the inside of frame 40. As a result, another part of the air having reached bracket 50 can be discharged to the outside of the electric air blower 1 without causing a loss due to passage through the inside of frame 40.

A detailed configuration of each member included in electric motor 2 will be described with reference to Figs. 1 to 3.

As illustrated in Figs. 1 and 2, rotor 10 of electric motor 2 is arranged with a minute air gap between rotor 10 and stator 20. Rotor 10 is an inner rotor. Rotor 10 is arranged inside stator 20. Rotor 10 includes rotating shaft 13. Rotor 10 rotates about axis C of rotating shaft 13 as a rotation center by a magnetic force generated by stator 20.

Rotor 10 generates a magnetic force acting on stator 20. Specifically, an orientation of a main magnetic flux generated by rotor 10 is a direction orthogonal to the direction in which axis C of rotating shaft 13 extends. Rotor 10 is an armature. Rotor 10 includes rotor core 11 attached to rotating shaft 13, winding coil 12 wound around rotor core 11, rotating shaft 13, and commutator 14. Figs. 1 to 3 schematically illustrate winding coil 12.

Rotor core 11 is an armature core around which winding coil 12 is wound. Rotor core 11 is a laminate in which a plurality of electromagnetic steel sheets are laminated in the direction in which axis C of rotating shaft 13 extends. Rotor core 11 is not limited to the laminate of the electromagnetic steel plates. Rotor core 11 may be a bulk body made of a magnetic material.

Rotor core 11 has a plurality of teeth each protruding outward in a radial direction of rotating shaft 13. The plurality of teeth radially extend in a direction (radial direction) orthogonal to axis C of rotating shaft 13. The plurality of teeth are magnetic poles. The plurality of teeth generate a magnetic force acting on stator 20 by a current flowing through winding coil 12 wound around each tooth.

Winding coil 12 is wound around rotor core 11. Specifically, winding coil 12 is wound around the plurality of teeth of rotor core 11. Winding coil 12 may be wound around rotor core 11 via an insulator. Winding coil 12 is electrically connected to commutator segment 14a of commutator 14. The current flows through winding coil 12 via commutator 14, and thus, the magnetic force acting on stator 20 is generated in each tooth of rotor core 11.

Rotating shaft 13 is fixed to the center of rotor core 11. Rotating shaft 13 is a shaft including axis C. Rotating shaft 13 is a member having an elongated rod shape such as a metal rod. Axis C of rotating shaft 13 is a center when rotor 10 rotates. A longitudinal direction (extending direction) of rotating shaft 13 is a direction (axial direction) in which axis C extends.

Rotating shaft 13 is fixed to rotor core 11 in a state of penetrating rotor core 11 in such a way as to extend on both sides of rotor core 11 in the direction in which axis C of rotating shaft 13 extends. Specifically, rotating shaft 13 is inserted into a through hole provided at the center of rotor core 11 and is fixed to rotor core 11. Rotating shaft 13 is fixed to rotor core 11, for example, by being press-fitted or shrink-fitted into the through hole of rotor core 11.

Rotating shaft 13 is rotatably supported by first bearing 15 and second bearing 16. Specifically, first site 13a of rotating shaft 13 protruding to one side from rotor core 11 is supported by first bearing 15. Second site 13b of rotating shaft 13 protruding to the other side from rotor core 11 is supported by second bearing 16. As an example, first bearing 15 and second bearing 16 are bearings such as ball bearings. In this manner, rotating shaft 13 is supported by first bearing 15 and second bearing 16 in a rotatable state. First bearing 15 is fixed to bracket 50. Second bearing 16 is fixed to a bottom of frame 40. That is, bracket 50 is a first bracket. Frame 40 is a second bracket.

First site 13a of rotating shaft 13 protrudes from first bearing 15. A distal end of first site 13a of rotating shaft 13 protruding from first bearing 15 is attached to rotary fan 3.

Commutator 14 is attached to rotating shaft 13. Therefore, commutator 14 rotates together with rotating shaft 13. Commutator 14 is attached to second site 13b of rotating shaft 13. Specifically, commutator 14 is arranged between rotor core 11 and second bearing 16 on rotating shaft 13.

Commutator 14 includes a plurality of commutator segments 14a arrayed annularly in such a way as to surround rotating shaft 13. The plurality of commutator segments 14a are insulated and separated from one another in a rotation direction of rotating shaft 13. As described above, each of the plurality of commutator segments 14a is electrically connected to winding coil 12.

As illustrated in Fig. 2, stator 20 opposes rotor 10. Specifically, stator 20 opposes rotor core 11. Stator 20 is arranged on an outer peripheral side in a radial direction of rotor core 11. Stator 20 is a plurality of magnets 21 arranged at intervals over a circumferential direction of rotor 10. Magnet 21 is a field magnet that generates a magnetic flux for generating torque. Magnet 21 is, for example, a permanent magnet having an S pole and an N pole. The plurality of magnets 21 are arranged in such a way that N poles and S poles alternate along the rotation direction (circumferential direction) of rotating shaft 13.

Stator 20 includes two magnets 21 opposing each other via rotor 10. A minute air gap is present between an inner surface of each magnet 21 and an outer peripheral surface of rotor 10 (rotor core 11). Magnet 21 is fixed to yoke 30.

As illustrated in Fig. 2, yoke 30 surrounds magnet 21. Yoke 30 constitutes a magnetic circuit (field) together with magnet 21. Therefore, yoke 30 may be regarded as a part of stator 20. Yoke 30 has a tubular shape with a constant thickness. Yoke 30 surrounds entire rotor 10 and stator 20 (magnet 21). Yoke 30 is made of a magnetic material such as iron.

As illustrated in Figs. 1 and 2, frame 40 is a housing (case) that accommodates components constituting electric motor 2, such as rotor 10 and stator 20. Frame 40 is an outer member (outer shell) of electric air blower 1 and electric motor 2. Frame 40 can be made of, for example, a metallic material such as aluminum.

As illustrated in Figs. 2 and 3, a plurality of exhaust ports 40b for discharging the air sucked by the rotation of rotary fan 3 are provided in each of the side wall portion and the bottom of frame 40.

As illustrated in Figs. 1 and 2, a plurality of gaps G serving as ventilation paths along the direction (rotation axis direction) in which axis C of rotating shaft 13 extends are formed between an outer surface of yoke 30 and an inner surface of frame 40. The plurality of gaps G are formed.

As illustrated in Figs. 1 to 3, frame 40 has bulge 41 in which a part of the side wall portion of frame 40 bulges outward in a radial direction. Gap G is a space region between bulge 41 and yoke 30. Bulge 41 is a rib formed in a ridge. Bulge 41 can be formed by, for example, press-working the side wall portion of frame 40.

As illustrated in Figs. 1 and 2, bracket 50 covers opening 40a of frame 40. Bracket 50 partially covers opening 40a of frame 40 without completely closing opening 40a of frame 40. That is, in a state where bracket 50 is attached to frame 40, the air commutated by air guide 4 flows into frame 40.

A plurality of through holes as openings through which the air commutated by air guide 4 passes are provided in bracket 50. Specifically, as illustrated in Figs. 1 to 3, four first through holes 51 positioned inside in a radial direction and four second through holes 52 positioned outside in the radial direction of first through holes 51 are provided in bracket 50.

Bracket 50 is fixed to frame 40. For example, bracket 50 and frame 40 are fixed by a site (recess) between two adjacent bulges 41 of the side wall portion of frame 40 being jointed to bracket 50.

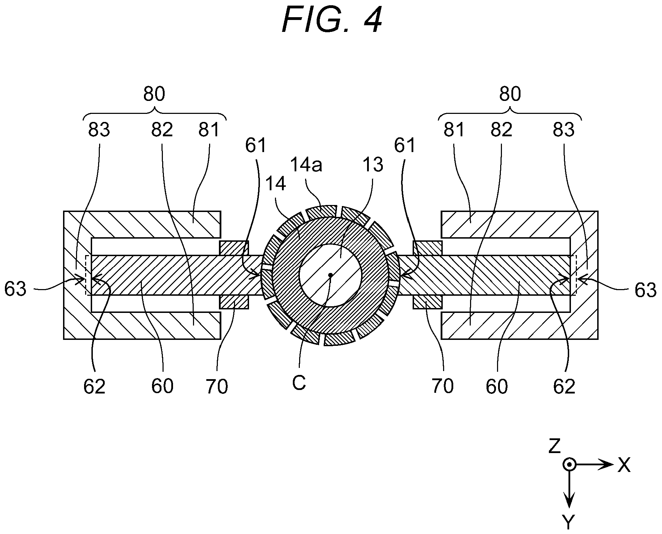

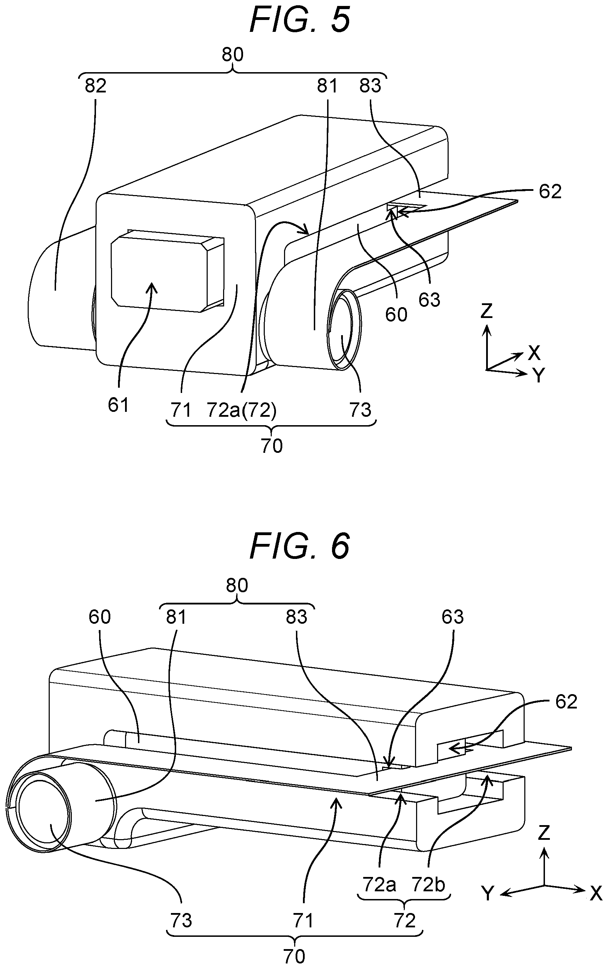

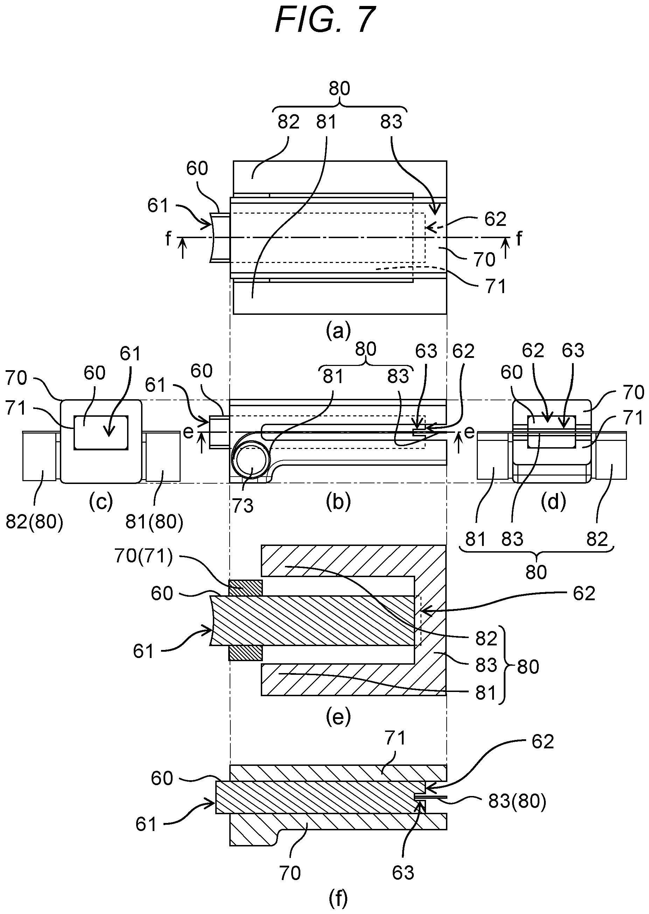

Next, detailed configurations of brush 60, brush holder 70, and constant load spring 80 will be described with reference to Figs. 1 to 3 and Figs. 4 to 7. Fig. 4 is a sectional view (XY sectional view) of electric air blower 1 according to the first exemplary embodiment taken along a plane passing through the pair of brushes 60 and orthogonal to axis C of rotating shaft 13. Fig. 5 is a perspective view of an assembly in which brush 60, brush holder 70, and constant load spring 80 are combined in electric motor 2 according to the first exemplary embodiment as viewed obliquely from the front. Fig. 6 is a perspective view of the assembly in which brush 60, brush holder 70, and constant load spring 80 are combined in electric motor 2 according to the first exemplary embodiment as viewed obliquely from the rear. Fig. 7 is a diagram illustrating a configuration of the assembly in which brush 60, brush holder 70, and constant load spring 80 are combined in electric motor 2 according to the first exemplary embodiment. In Fig. 7, (a) is a top view, (b) is a side view, (c) is a front view, (d) is a rear view, (e) is a sectional view taken along line e-e of (b), and (f) is a sectional view taken along line f-f of (a).

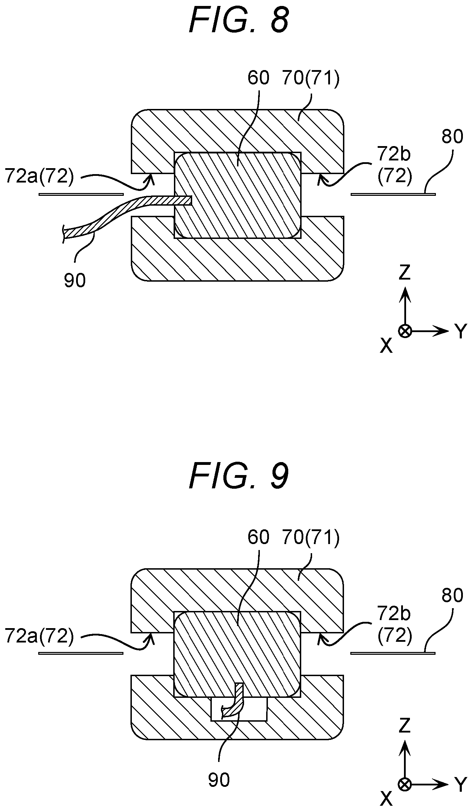

As illustrated in Figs. 1, 2, and 4, brush 60 comes into contact with commutator 14. Specifically, brush 60 comes into contact with commutator segment 14a of commutator 14. Brush 60 is a power supply brush (energizing brush) that supplies power to winding coil 12 of rotor 10. For example, a pigtail wire (pigtail wire 90 to be described later with reference to Figs. 8 and 9) electrically connected to a power supply terminal that receives power from an external power supply is connected to brush 60. Brush 60 comes into contact with commutator segment 14a, and thus, current (armature current) supplied to brush 60 via the pigtail wire flows to winding coil 12 of rotor 10 via commutator segment 14a.

Brush 60 is made of a conductive conductor. Specifically, brush 60 is a carbon brush made of carbon. As an example, brush 60 is a metal graphite brush containing metal such as copper and carbon. Brush 60 can be manufactured by pulverizing a kneaded product obtained by kneading graphite powder, copper powder, a binder resin, and a curing agent, compression molding the pulverized product into a rectangular parallelepiped, and firing the resultant. Brush 60 is elongated in an initial state before being worn. As an example, brush 60 is an elongated substantially rectangular parallelepiped.

As illustrated in Fig. 4, brush 60 has front end surface 61 coming into contact with commutator 14 and rear end surface 62 positioned on a side opposite to front end surface 61.

Front end surface 61 of brush 60 is an end surface at a front end that is one end of brush 60 in a longitudinal direction. Front end surface 61 is an end surface of brush 60 on rotating shaft 13 side (commutator 14 side). Front end surface 61 is a sliding contact surface in sliding contact with commutator segment 14a of commutator 14.

Rear end surface 62 of brush 60 is an end surface at a rear end that is the other end of brush 60 in the longitudinal direction. Rear end surface 62 is an end surface of brush 60 on a side opposite to rotating shaft 13 side. Recess 63 is provided in rear end surface 62. Although details will be described later, coupling portion 83 of constant load spring 80 is inserted into recess 63.

As illustrated in (b) and (f) of Fig. 7, recess 63 is formed such that a part of rear end surface 62 is recessed toward front end surface 61. That is, a bottom surface of recess 63 is a part of rear end surface 62. Recess 63 is formed such that rear end surface 62 is notched in a rectangular shape in sectional view. Specifically, a shape of recess 63 is rectangular in the XZ section.

Recess 63 is a groove extending in a direction orthogonal to the longitudinal direction of brush 60. As illustrated in Fig. 4, recess 63 is formed from one side surface to the other side surface of brush 60. Recess 63 can be formed, for example, by cutting off a part of flat rear end surface 62 of the rectangular parallelepiped brush with a drill or the like and cutting rear end surface 62. The shape of recess 63 may be formed not by cutting the flat end surface of brush 60 but by a mold when brush 60 is sintered.

Brush 60 is pressed against commutator 14 by receiving a load by constant load spring 80. Brush 60 is pressed against commutator 14, and thus, brush 60 constantly comes into contact with commutator 14 during an operation of electric motor 2. As a result, front end surface 61 of brush 60 is worn by friction with commutator 14, and brush 60 is shortened. That is, as front end surface 61 is worn, rear end surface 62 of brush 60 moves toward commutator 14.

As illustrated in Fig. 4, brush 60 comes into contact with commutator segment 14a of commutator 14 in a direction intersecting axis C of rotating shaft 13 (that is, in a radial direction about axis C toward a side surface of rotating shaft 13 in a plane intersecting axis C of rotating shaft 13). Brush 60 is arranged such that the longitudinal direction is the direction (radial direction) orthogonal to axis C of rotating shaft 13.

A plurality of brushes 60 are arranged. Specifically, two brushes 60 are arranged. In this case, a pair of brushes 60 arranged to face each other with commutator 14 interposed therebetween is provided to sandwich commutator 14. That is, the pair of brushes 60 are arranged to oppose each other via commutator 14. Electric motor 2 operates to rotate commutator 14 together with rotating shaft 13, and thus, front end surface 61 of each brush 60 continues to sequentially come into contact with all commutator segments 14a.

As illustrated in Fig. 1, brush 60 is held by brush holder 70. Specifically, brush 60 is held by brush holder 70 to be movable in a direction (radial direction) intersecting the direction in which axis C of rotating shaft 13 extends. Brush holder 70 is fixed to frame 40. Specifically, brush holder 70 is inserted into the opening provided in frame 40, and is fixed to frame 40 by a screw. Brush holders 70 are arranged in number corresponding to the number of brushes 60. In the present exemplary embodiment, since two brushes 60 are arranged, two brush holders 70 are also arranged.

As illustrated in Figs. 5 to 7, brush holder 70 includes brush accommodation portion 71 that accommodates brush 60, as a brush holding portion that holds brush 60. As an example, brush accommodation portion 71 is a tubular portion surrounding brush 60. Brush accommodation portion 71 has an elongated substantially rectangular cylindrical shape extending in the direction intersecting the direction in which axis C of rotating shaft 13 extends. Brush holder 70 is a resin molded article made of an insulating resin material.

Both ends of brush accommodation portion 71 in a longitudinal direction are opened. Brush 60 is arranged in brush accommodation portion 71 in a state where front end surface 61 is exposed from the opening. Brush 60 accommodated in brush accommodation portion 71 protrudes from the opening to come into contact with commutator segment 14a of commutator 14. Brush 60 may be arranged in brush accommodation portion 71 in a state of being accommodated in a brush box made of a metal plate.

As illustrated in Fig. 6, slits 72 extending along the longitudinal direction of brush 60 are formed on both side surfaces of brush accommodation portion 71. Specifically, first slit 72a extending along the longitudinal direction of brush 60 is formed on one side surface of brush accommodation portion 71. Second slit 72b extending along the longitudinal direction of brush 60 is formed on the other side surface of brush accommodation portion 71. First slit 72a and second slit 72b are provided in parallel at the same height position.

As illustrated in Figs. 5 to 7, constant load spring 80 is fixed to brush holder 70. That is, brush holder 70 holds not only brush 60 but also constant load spring 80. Specifically, a pair of protrusions 73 as fixing portions for fixing constant load spring 80 is provided in brush holder 70. The pair of protrusions 73 protrudes outward from both side surfaces of brush holder 70. The pair of protrusions 73 is provided at a front end of brush holder 70. That is, one of the pair of protrusions 73 protrudes from one side surface of the front end of brush holder 70. The other of the pair of protrusions 73 protrudes from the other side surface of the front end of brush holder 70. As an example, each of the pair of protrusions 73 has a columnar shape. First spiral portion 81 of constant load spring 80 is inserted into one of the pair of protrusions 73. Second spiral portion 82 of constant load spring 80 is inserted into the other of the pair of protrusions 73. As a result, first spiral portion 81 and second spiral portion 82 are fixed to the pair of protrusions 73. That is, first spiral portion 81 and second spiral portion 82 are fixed to brush holder 70.

Constant load spring 80 is a brush spring for pressing brush 60 against commutator 14. Constant load spring 80 comes into contact with brush 60. Constant load spring 80 directly applies a load to brush 60 to press brush 60 against commutator 14.

Constant load spring 80 is a spring that applies a uniform load to brush 60. As illustrated in Figs. 5 to 7, constant load spring 80 is made of a wire material having a strip shape. Constant load spring 80 is a spiral spring. Constant load spring 80 has spiral portions (coil portions) in which a wire material having a strip shape is wound in a spiral shape. Constant load spring 80 includes, as a pair of spiral portions, first spiral portion 81 and second spiral portion 82 each made of the strip-shaped wire material wound in the spiral shape.

First spiral portion 81 and second spiral portion 82 are arranged to sandwich the front end of brush 60. First spiral portion 81 and second spiral portion 82 are arranged to sandwich the front end of brush holder 70.

First spiral portion 81 and second spiral portion 82 are formed into the spiral shape by winding around a lateral direction of brush 60. That is, constant load spring 80 is arranged such that coil surfaces of first spiral portion 81 and second spiral portion 82 face the side surface of brush holder 70. Therefore, a plate surface of the strip-shaped wire material forming first spiral portion 81 drawn out from first spiral portion 81 and a plate surface of the strip-shaped wire material forming second spiral portion 82 drawn out from second spiral portion 82 are parallel to the plane (XY plane) orthogonal to the axis C of rotating shaft 13. A central axis of the winding of first spiral portion 81 coincides with a central axis of the winding of second spiral portion 82.

As described above, first spiral portion 81 and second spiral portion 82 are fixed to brush holder 70 by being inserted into the pair of protrusions 73 provided in brush holder 70. That is, first spiral portion 81 and second spiral portion 82 are fixed ends of constant load spring 80.

Constant load spring 80 further includes coupling portion 83 that couples the strip-shaped wire material forming first spiral portion 81 and the strip-shaped wire material forming second spiral portion 82. Similarly to first spiral portion 81 and second spiral portion 82, coupling portion 83 is made of a wire material having a strip shape. The wire material forming first spiral portion 81, the strip-shaped wire material forming second spiral portion 82, and the strip-shaped wire material forming coupling portion 83 are integrated. That is, constant load spring 80 is made of one wire material. Note that, the wire material forming first spiral portion 81, the strip-shaped wire material forming second spiral portion 82, and the strip-shaped wire material forming coupling portion 83 have the same plate width. However, the present disclosure is not limited thereto.

Coupling portion 83 applies a load to rear end surface 62 of brush 60 to press brush 60 against commutator 14. That is, brush 60 is pressed against commutator 14 by the load from coupling portion 83.

Coupling portion 83 comes into contact with rear end surface 62 of brush 60. In this case, an end surface (side surface) of the strip-shaped wire material forming coupling portion 83 abuts on rear end surface 62 of brush 60. That is, a thickness of a metal plate forming coupling portion 83 comes into contact with rear end surface 62 of brush 60. Specifically, recess 63 is formed on rear end surface 62 of brush 60, and at least a part of coupling portion 83 is inserted into recess 63. Therefore, the end surface of the strip-shaped wire material forming coupling portion 83 abuts on the bottom surface of recess 63.

There is a gap between a principal surface of the strip-shaped wire material forming coupling portion 83 and an inner surface of recess 63. However, this gap may not be present. In this case, coupling portion 83 may be press-fitted into recess 63. As a result, coupling portion 83 can be fixed to recess 63.

Coupling portion 83 couples the strip-shaped wire materials drawn out from first spiral portion 81 and second spiral portion 82 arranged to sandwich brush 60. Thus, in top view, coupling portion 83 protrudes from the rear end surface of brush 60 in a Y-axis direction.

First spiral portion 81 and second spiral portion 82 are arranged to sandwich brush accommodation portion 71 of brush holder 70. Thus, coupling portion 83 protrudes from slits 72 provided on both side surfaces of brush accommodation portion 71. Specifically, coupling portion 83 protrudes from first slit 72a formed in brush accommodation portion 71 and protrudes from second slit 72b formed in brush accommodation portion 71.

Constant load spring 80 is made of one metal plate having a strip shape formed in a predetermined shape. A shape of the strip-shaped metal plate forming constant load spring 80 before forming first spiral portion 81 and second spiral portion 82 is a U-shape in top view. In this case, first spiral portion 81 can be formed by winding a plurality of strip-shaped wire materials forming one leg of the U-shaped metal plate in a spiral shape. Similarly, second spiral portion 82 can be formed by winding a plurality of wire materials each having a strip shape forming the other leg of the U-shaped metal plate in a spiral shape. Therefore, a shape of one round of first spiral portion 81 and second spiral portion 82 is circular.

First spiral portion 81 and second spiral portion 82 having the above configuration have a spring elastic force (spring restoring force) by which the strip-shaped wire materials are drawn out from first spiral portion 81 and second spiral portion 82 such that the drawn strip-shaped wire materials tend to return to original states.

A thickness of the metal plate forming constant load spring 80 is, for example, less than or equal to 0.1 mm. As an example, the thickness of the metal plate forming constant load spring 80 is 0.08 mm or 0.05 mm. The thickness of the metal plate forming constant load spring 80 is not limited to be less than or equal to 0.1 mm. As long as constant load spring 80 can be wound in the spiral shape, the thickness of the metal plate forming constant load spring 80 may be larger than 0.1 mm. The shape of the strip-shaped metal plate forming constant load spring 80 may not be the U-shape.

As illustrated in Figs. 5 to 7, for constant load spring 80 installed in brush holder 70, the strip-shaped wire material forming first spiral portion 81 is drawn out along one side surface of brush 60. The strip-shaped wire material forming second spiral portion 82 is drawn out along the other side surface of brush 60. Specifically, the strip-shaped wire material forming first spiral portion 81 is drawn out along one side surface of brush accommodation portion 71 of brush holder 70 toward rear end surface 62 of brush 60. The strip-shaped wire material forming second spiral portion 82 is drawn out along the other side surface of brush accommodation portion 71 of brush holder 70 toward rear end surface 62 of brush 60.

Brush 60, brush holder 70, and constant load spring 80 having the above configuration are assembled to electric motor 2 as follows. Specifically, brush 60 is inserted into brush accommodation portion 71 of brush holder 70 toward commutator 14, and coupling portion 83 of constant load spring 80 is inserted into recess 63 provided on rear end surface 62 of brush 60. By pulling first spiral portion 81 and second spiral portion 82 of constant load spring 80 toward commutator 14, the strip-shaped wire materials are drawn out from first spiral portion 81 and second spiral portion 82, and first spiral portion 81 and second spiral portion 82 are inserted into and hooked on the pair of protrusions 73. As a result, constant load spring 80 can be set in brush holder 70.

At this time, the strip-shaped wire materials are drawn out from first spiral portion 81 and second spiral portion 82, a load that causes the strip-shaped wire materials forming first spiral portion 81 and second spiral portion 82 to return to the original states is generated. Due to the loads generated by first spiral portion 81 and second spiral portion 82 at this time, coupling portion 83 coming into contact with rear end surface 62 of brush 60 pulls brush 60 toward commutator 14. That is, coupling portion 83 presses brush 60 against commutator 14. In this manner, constant load spring 80 presses brush 60 against commutator 14 by the loads of first spiral portion 81 and second spiral portion 82.

As described above, pigtail wire 90 electrically connected to the power supply terminal is connected to brush 60. Fig. 8 is a diagram illustrating an example of a connection aspect between brush 60 and pigtail wire 90. Fig. 9 is a diagram illustrating another example of the connection aspect between brush 60 and pigtail wire 90. As illustrated in Fig. 8, pigtail wire 90 may be connected to the side surface of brush 60. As illustrated in Fig. 9, pigtail wire 90 may be connected to a bottom surface of brush 60. In this manner, a connection portion of pigtail wire 90 in brush 60 is not particularly limited. That is, the connection portion between brush 60 and pigtail wire 90 has a high degree of freedom.

In electric motor 2 having the above configuration, current supplied to brush 60 flows as armature current (drive current) to winding coil 12 of rotor 10 via commutator 14, and thus, a magnetic flux is generated in rotor 10. A magnetic force generated by interaction between a magnetic flux generated in rotor 10 and a magnetic flux generated from stator 20 becomes torque that rotates rotor 10. At this time, a direction of flow of the current is switched in accordance with a positional relationship when commutator segments 14a of commutator 14 come into contact with brush 60. In this manner, the direction of flow of the current is switched, and thus, a rotational force is generated in a constant direction by a repulsive force and an attractive force of the magnetic force generated between rotor 10 and stator 20. This rotational force rotates rotor 10 about axis C of rotating shaft 13. As a result, in electric air blower 1, rotary fan 3 attached to rotating shaft 13 rotates.

Rotor 10 rotates in this manner, and thus, front end surface 61 of brush 60 coming into contact with commutator 14 is worn. At this time, brush 60 constantly receives a constant load (pressing force) from constant load spring 80 and is pressed against commutator 14. As a result, as front end surface 61 of brush 60 is worn due to friction with commutator 14, brush 60 slides toward commutator 14 in brush accommodation portion 71 of brush holder 70. That is, rear end surface 62 of brush 60 moves toward commutator 14.

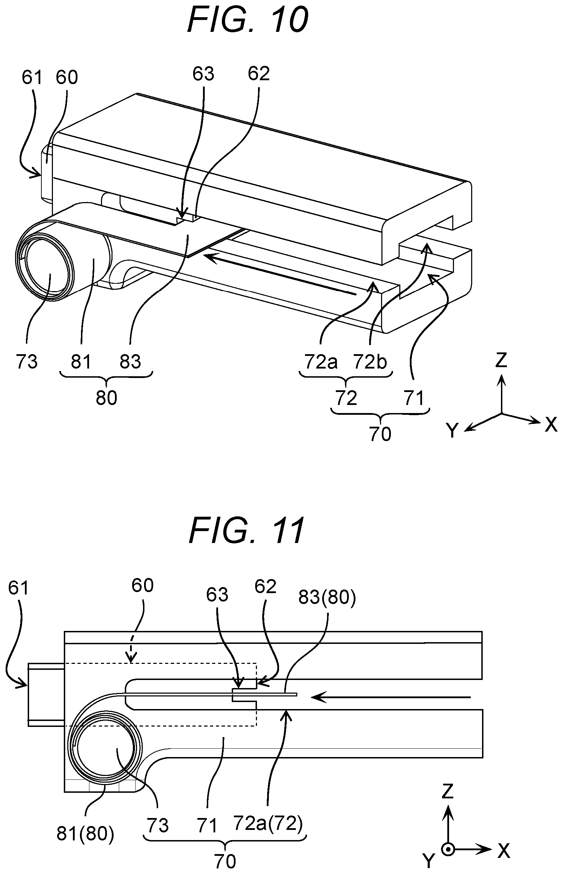

At this time, constant load spring 80 applies, to brush 60 by coupling portion 83, the load generated by drawing out the strip-shaped wire materials from first spiral portion 81 and second spiral portion 82. As a result, brush 60 is pressed against commutator 14 by being pressed from coupling portion 83. Fig. 10 is a perspective view illustrating a scene when coupling portion 83 of constant load spring 80 moves toward commutator 14 due to the wear of brush 60 in the assembly in which brush 60, brush holder 70, and constant load spring 80 are combined. Fig. 11 is a side view illustrating a scene when coupling portion 83 of constant load spring 80 moves toward commutator 14 due to the wear of brush 60 in the assembly in which brush 60, brush holder 70, and constant load spring 80 are combined. As illustrated in Figs. 10 and 11, coupling portion 83 of constant load spring 80 moves toward commutator 14 as front end surface 61 of brush 60 is worn.

Specifically, as illustrated in Figs. 10 and 11, first spiral portion 81 and second spiral portion 82 of constant load spring 80 tend to return to the original states by the spring restoring force. Thus, as brush 60 is worn, the strip-shaped wire material forming each of first spiral portion 81 and second spiral portion 82 is unwound. As a result, coupling portion 83 that couples first spiral portion 81 and second spiral portion 82 moves toward commutator 14 while pressing brush 60 against commutator 14.

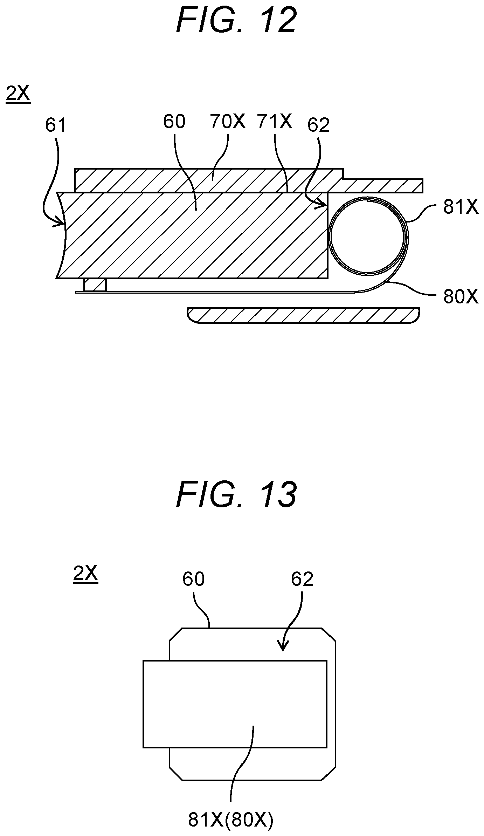

Here, the operations and effects of electric motor 2 according to the present exemplary embodiment will be described in comparison with electric motor 2X of the related art. Fig. 12 is a sectional view illustrating brush 60 and constant load spring 80X set in brush holder 70X in electric motor 2X of the related art. Fig. 13 is a diagram of brush 60 and constant load spring 80X in electric motor 2X of an example of the related art as viewed from a back side.

As illustrated in Fig. 12, in electric motor 2X of the related art, constant load spring 80X includes one spiral portion 81X. Constant load spring 80X is arranged such that spiral portion 81X is positioned in brush accommodation portion 71X of brush holder 70X together with brush 60. At this time, spiral portion 81X of constant load spring 80X is formed into a spiral shape by winding around an axial direction of a rotating shaft of electric motor 2X. Spiral portion 81X of constant load spring 80X is arranged behind rear end surface 62 of brush 60. That is, spiral portion 81X is arranged in a slidable range of brush 60. Thus, in electric motor 2X of the related art, a length of brush 60 needs to be shortened by a dimension of spiral portion 81X. As a result, a lifespan of electric motor 2X is shortened. On the other hand, in a case where the length of brush 60 is not shortened, a length of brush holder 70X needs to be lengthened. As a result, a size of electric motor 2X is increased.

In electric motor 2X using constant load spring 80X as a brush spring, a height of brush 60 is determined by a plate width of a wire material having a strip shape forming constant load spring 80X. Specifically, first, the plate width of the strip-shaped wire material forming constant load spring 80X is required to be more than or equal to a certain value from the viewpoint of a load generated by spiral portion 81X and the manufacturing of constant load spring 80X. Furthermore, in order to suppress the rattling of brush 60 receiving the load (pressing force) of spiral portion 81X, rear end surface 62 of brush 60X needs to have a stopper for spiral portion 81X. Thus, as illustrated in Fig. 13, the height of brush 60 needs to be higher than a height of spiral portion 81X. That is, the height of brush 60 needs to be larger than the plate width of the strip-shaped wire material forming constant load spring 80X. In this manner, when spiral portion 81X is arranged behind brush 60 using constant load spring 80X as a brush spring, the height of brush 60 needs to be increased. Thus, it is difficult to reduce a thickness of electric motor 2X.

By contrast, in electric motor 2 according to the present exemplary embodiment, constant load spring 80 having first spiral portion 81, second spiral portion 82, and coupling portion 83 is used as a brush spring for pressing brush 60 against commutator 14. Brush 60 is pressed against commutator 14 by the load from coupling portion 83 of constant load spring 80.

With this configuration, constant load spring 80 can press brush 60 against commutator 14 without arranging first spiral portion 81 and second spiral portion 82 behind rear end surface 62 of brush 60. That is, even though first spiral portion 81 and second spiral portion 82 are not arranged in the slidable range of brush 60, the loads of first spiral portion 81 and second spiral portion 82 can be applied to brush 60. As a result, even though constant load spring 80 is used as the brush spring, it is not necessary to shorten the length of brush 60. Therefore, it is possible to realize long-lifespan electric motor 2.

Furthermore, first spiral portion 81 and second spiral portion 82 may not be arranged on rear end surface 62 of brush 60. Thus, it is not necessary to increase the height (length in the Z-axis direction) of brush 60, unlike electric motor 2X of the related art. That is, the height of brush 60 does not need to be larger than the plate width of the strip-shaped wire material forming constant load spring 80. As a result, even though constant load spring 80 is used as the brush spring, small electric motor 2 can be easily realized.

In electric motor 2 according to the present exemplary embodiment, coupling portion 83 of constant load spring 80 comes into contact with rear end surface 62 of brush 60.

Another component may be inserted between coupling portion 83 of constant load spring 80 and rear end surface 62 of brush 60 to indirectly apply the load by coupling portion 83 to brush 60. However, as in the present exemplary embodiment, coupling portion 83 may come into direct contact with rear end surface 62 of brush 60 without using another component.

With this configuration, coupling portion 83 can directly apply the load to rear end surface 62 of brush 60. Thus, the load can be stably applied to rear end surface 62 of brush 60 as compared with a case where another component is inserted between coupling portion 83 and rear end surface 62 of brush 60. In addition, since another component is not used, an increase in cost can be suppressed.

In electric motor 2 according to the present exemplary embodiment, the end surface of the strip-shaped wire material forming coupling portion 83 abuts on rear end surface 62 of brush 60.

With this configuration, the strip-shaped wire material forming first spiral portion 81, the strip-shaped wire material forming second spiral portion 82, and the strip-shaped wire material forming coupling portion 83 are integrated, and thus, coupling portion 83 can come into contact with rear end surface 62 of brush 60 only by drawing out the wire materials from first spiral portion 81 and second spiral portion 82.

In electric motor 2 according to the present exemplary embodiment, recess 63 is formed on rear end surface 62 of brush 60. At least a part of coupling portion 83 of constant load spring 80 is inserted into recess 63.

With this configuration, since coupling portion 83 can be fixed at a fixed position, the load can be stably applied to brush 60. Therefore, the slidability of brush 60 can be improved.

In electric motor 2 according to the present exemplary embodiment, first spiral portion 81 and second spiral portion 82 of constant load spring 80 are arranged to sandwich the front end of brush 60. The strip-shaped wire material forming first spiral portion 81 is drawn out along one side surface of brush 60. The strip-shaped wire material forming second spiral portion 82 is drawn out along the other side surface of brush 60.

With this configuration, even though constant load spring 80 having first spiral portion 81 and second spiral portion 82 is used, first spiral portion 81 and second spiral portion 82 are arranged to sandwich the front end of brush 60, and thus, the height of electric motor 2 can be reduced. Therefore, small electric motor 2 can be easily realized. Specifically, first spiral portion 81 and second spiral portion 82 are arranged to sandwich brush accommodation portion 71 in which brush 60 is accommodated.

In electric motor 2 according to the present exemplary embodiment, slits 72 extending along the longitudinal direction of brush 60 are formed on both side surfaces of brush accommodation portion 71 of brush holder 70. Coupling portion 83 of constant load spring 80 protrudes from slit 72.

With this configuration, when brush 60 is worn and the strip-shaped wire materials forming first spiral portion 81 and second spiral portion 82 are unwound, coupling portion 83 can be slid-moved toward commutator 14 along first slit 72a and second slit 72b. That is, coupling portion 83 can be moved toward commutator 14 while being held by brush holder 70. In this manner, first slit 72a and second slit 72b function as guides when coupling portion 83 moves toward commutator 14.

In electric motor 2 according to the present exemplary embodiment, first spiral portion 81 and second spiral portion 82 of constant load spring 80 are fixed to brush holder 70. That is, in constant load spring 80, first spiral portion 81 and second spiral portion 82 are fixed ends.

With this configuration, a direction of the load generated when the strip-shaped wire materials drawn out from first spiral portion 81 and second spiral portion 82 returns to the original states is not a direction in which first spiral portion 81 and second spiral portion 82 are directed toward coupling portion 83 but a direction in which coupling portion 83 is directed toward first spiral portion 81 and second spiral portion 82 (fixed end side). Therefore, when brush 60 is worn, first spiral portion 81 and second spiral portion 82 do not move toward coupling portion 83, but coupling portion 83 moves toward first spiral portion 81 and second spiral portion 82. Rear end surface 62 of brush 60 can be attracted by coupling portion 83 by the load generated in the direction in which coupling portion 83 is directed toward first spiral portion 81 and second spiral portion 82. As a result, brush 60 is pressed against commutator 14 by constant load spring 80.

In electric motor 2 according to the present exemplary embodiment, the strip-shaped wire material forming first spiral portion 81, the strip-shaped wire material forming second spiral portion 82, and the strip-shaped wire material forming coupling portion 83 are integrated.

With this configuration, constant load spring 80 can be made of one metal plate having a predetermined shape. As a result, constant load spring 80 having first spiral portion 81, second spiral portion 82, and coupling portion 83 abutting on brush 60 can be manufactured at low cost.

As described above, electric motor 2 according to the present exemplary embodiment includes rotor 10 having rotating shaft 13 extending in the axial direction, commutator 14 attached to rotating shaft 13, brush 60 coming into contact with commutator 14, and brush spring 80 that presses brush 60 against commutator 14. Brush spring 80 includes first spiral portion 81 and second spiral portion 82 each made of the strip-shaped plate material wound in the spiral shape, and coupling portion 83 that couples the strip-shaped wire material forming first spiral portion 81 and the strip-shaped wire material forming second spiral portion 82. Brush 60 is pressed against commutator 14 by the load from coupling portion 83.

With this configuration, electric motor 2 does not need to shorten the brush even though the brush spring having the spiral portion is used. Therefore, electric motor 2 can realize a long-lifespan electric motor.

### (Second exemplary embodiment)

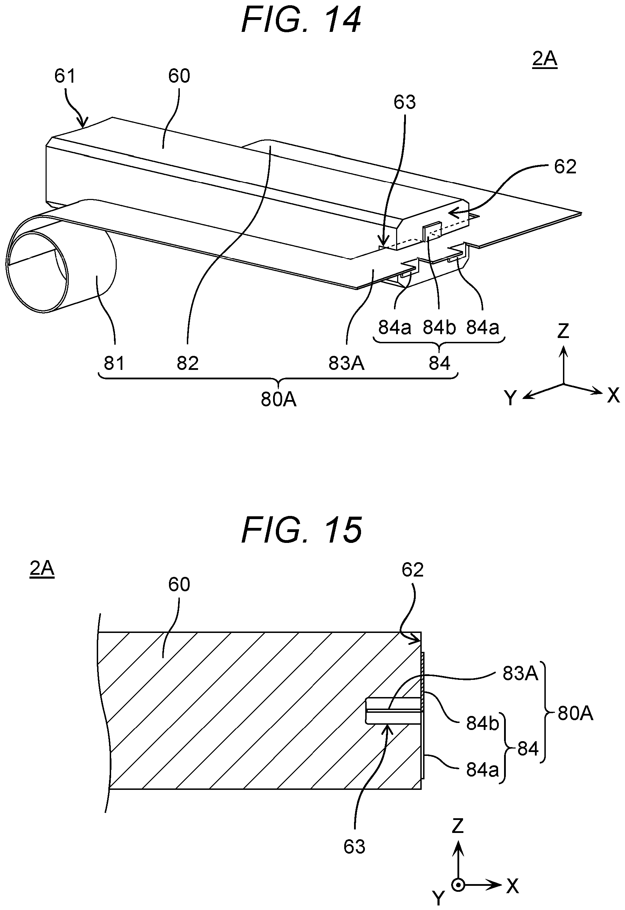

A second exemplary embodiment will be described with reference to Figs. 14 and 15. Fig. 14 is a perspective view illustrating an assembly in which brush 60 and constant load spring 80A are combined in electric motor 2A according to the second exemplary embodiment. Fig. 15 is an enlarged sectional view of a connection portion between brush 60 and constant load spring 80A in electric motor 2A according to the second exemplary embodiment.

Electric motor 2A is different from electric motor 2 according to the first exemplary embodiment in a configuration of constant load spring 80A. Specifically, as illustrated in Figs. 14 and 15, in constant load spring 80A, bent segment 84 is formed at coupling portion 83A coming into contact with rear end surface 62 of brush 60.

Bent segment 84 is formed by bending a part of a wire material having a strip shape forming coupling portion 83. Bent segment 84 is a cut-and-raised segment formed by cutting and raising a part of the strip-shaped wire material forming coupling portion 83A. For example, bent segment 84 can be formed by cutting and raising a part of a metal plate forming coupling portion 83A in a rectangular shape. Bent segment 84 is formed to stand on a principal surface of the strip-shaped wire material forming coupling portion 83A. Specifically, in coupling portion 83A, an angle formed between a principal surface of bent segment 84 and a principal surface of a portion where bent segment 84 is not formed is about 90°. That is, bent segment 84 is cut and raised at an angle of 90°. Bent segment 84 having the above configuration is in surface contact with rear end surface 62 of brush 60.

As illustrated in Fig. 14, a plurality of bent segments 84 are formed in coupling portion 83A. The plurality of bent segments 84 include first bent segment 84a and second bent segment 84b which are bent in opposite directions to each other in a height direction (Z-axis direction) of brush 60. First bent segment 84a is bent downward. Second bent segment 84b is bent upward. Specifically, first bent segment 84a is formed by cutting and raising a part of the strip-shaped wire material forming coupling portion 83A downward. Second bent segment 84b is formed by cutting a part of the strip-shaped wire material forming coupling portion 83A upward.

As illustrated in Fig. 14, two first bent segments 84a and one second bent segment 84b are formed as bent segments 84 in coupling portion 83A. However, the present disclosure is not limited thereto. A total number of bent segments 84 is not limited to three. A combination of the number of first bent segments 84a and the number of second bent segments 84b is not limited thereto.

Electric motor 2A has the same configuration as electric motor 2 according to the first exemplary embodiment except for the configuration of constant load spring 80A.

Therefore, electric motor 2A has effects similar to the effects of electric motor 2 according to the first exemplary embodiment. For example, in electric motor 2A according to the present exemplary embodiment, brush 60 is pressed against commutator 14 by constant load spring 80A having first spiral portion 81, second spiral portion 82, and coupling portion 83 as in the first exemplary embodiment.

With this configuration, even though constant load spring 80A is used as a brush spring, it is not necessary to shorten a length of brush 60. Therefore, it is possible to realize long-lifespan electric motor 2A. It is not necessary to increase a height of brush 60. Therefore, small electric motor 2A can be easily realized.

In electric motor 2A according to the present exemplary embodiment, coupling portion 83A of constant load spring 80A includes bent segment 84 formed by bending a part of the strip-shaped wire material forming coupling portion 83A. Bent segment 84 is in surface contact with rear end surface 62 of brush 60.

With this configuration, it is possible to increase a contact area between rear end surface 62 of brush 60 and coupling portion 83A. As a result, a more stable load can be applied to brush 60 by coupling portion 83A. Therefore, the slidability of brush 60 can be improved.

In electric motor 2A according to the present exemplary embodiment, a plurality of bent segments 84 are formed in coupling portion 83A. The plurality of bent segments 84 include first bent segment 84a and second bent segment 84b which are bent in opposite directions to each other in the height direction of brush 60.

With this configuration, the load can be uniformly applied to brush 60 in the height direction of brush 60. As a result, the load applied by coupling portion 83 can be more stably applied to brush 60. Therefore, the slidability of brush 60 can be further improved.

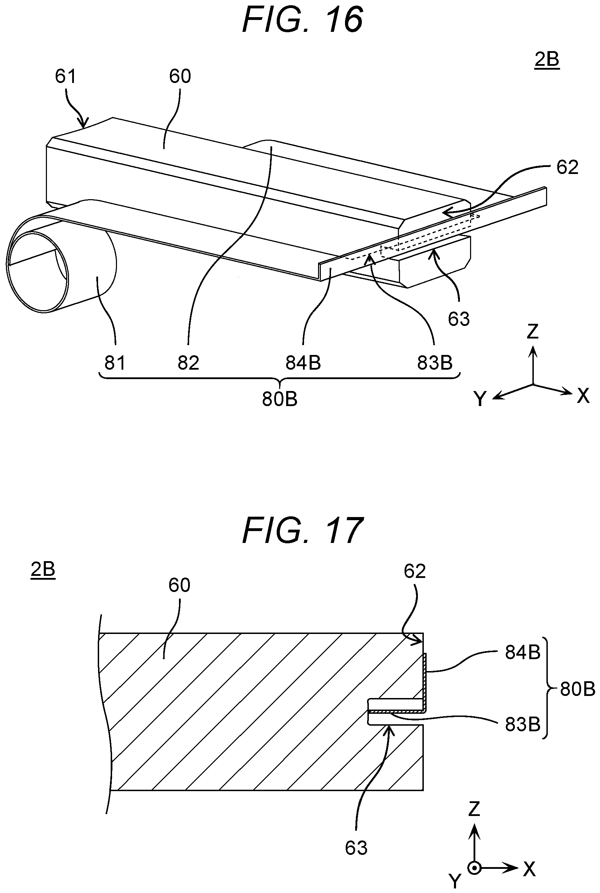

In the present exemplary embodiment, bent segments 84 are formed on both sides in the height direction of brush 60. However, the present disclosure is not limited thereto. Fig. 16 is a perspective view illustrating an assembly in which brush 60, a brush holder, and constant load spring 80B are combined in electric motor 2B according to Modification 1 of the second exemplary embodiment. Fig. 17 is an enlarged sectional view of a connection portion between brush 60 and constant load spring 80B in electric motor 2B according to Modification 1 of the second exemplary embodiment. For example, as in electric motor 2B illustrated in Figs. 16 and 17, bent segments 84B formed in coupling portion 83B of constant load spring 80B may be bent only in one direction. Specifically, bent segments 84B are bent only upward in the height direction of brush 60. In this case, a sectional shape of coupling portion 83B is an L-shape.

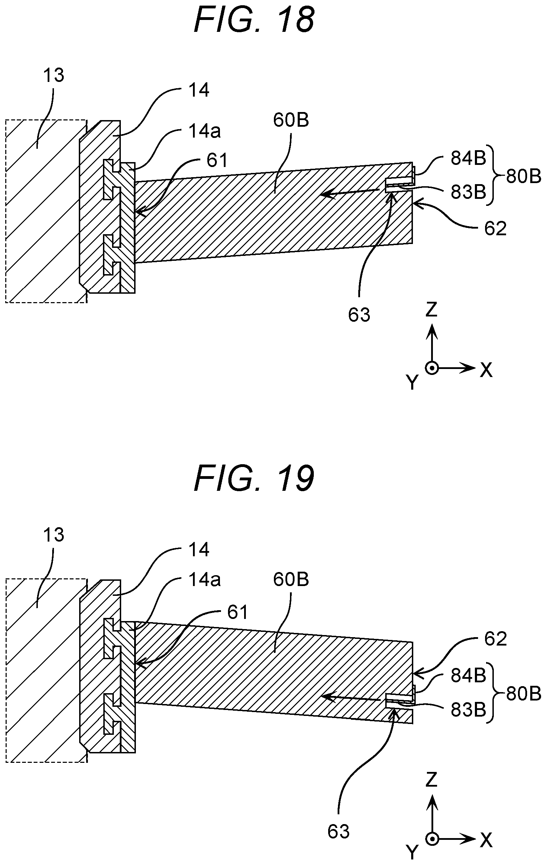

Fig. 18 is a sectional view illustrating configurations of brush 60B and constant load spring 80B in an electric motor according to Modification 2 of the second exemplary embodiment. Fig. 19 is a sectional view illustrating configurations of brush 60B and constant load spring 80B in an electric motor according to Modification 3 of the second exemplary embodiment. As illustrated in Figs. 18 and 19, constant load spring 80B having coupling portion 83B in which bent segments 84B bent only in one direction are formed may be used for an electric motor in which brush 60B is arranged to be inclined with respect to an axis of rotating shaft 13. In this case, as illustrated in Figs. 18 and 19, coupling portion 83B of constant load spring 80B may be shifted from a center of brush 60B in a height direction.

Specifically, as illustrated in Fig. 18, in a case where a front end of brush 60B is inclined downward, coupling portion 83B may be shifted upward from the center of brush 60B in the height direction. As a result, as indicated by a thick arrow in Fig. 18, a load by coupling portion 83B can be directed obliquely downward. Therefore, even though brush 60B is inclined, brush 60B can be stably pressed against commutator 14.

As illustrated in Fig. 19, in a case where the front end of brush 60B is inclined upward, coupling portion 83B may be shifted downward from the center of brush 60B in the height direction. As a result, as indicated by a thick arrow in Fig. 19, the load by coupling portion 83B can be directed obliquely upward. Therefore, even though brush 60B is inclined, brush 60B can be stably pressed against commutator 14.

### (Modification)

The technique of the present disclosure has been described above based on the first and second exemplary embodiments. However, the present disclosure is not limited to the first and second exemplary embodiments.

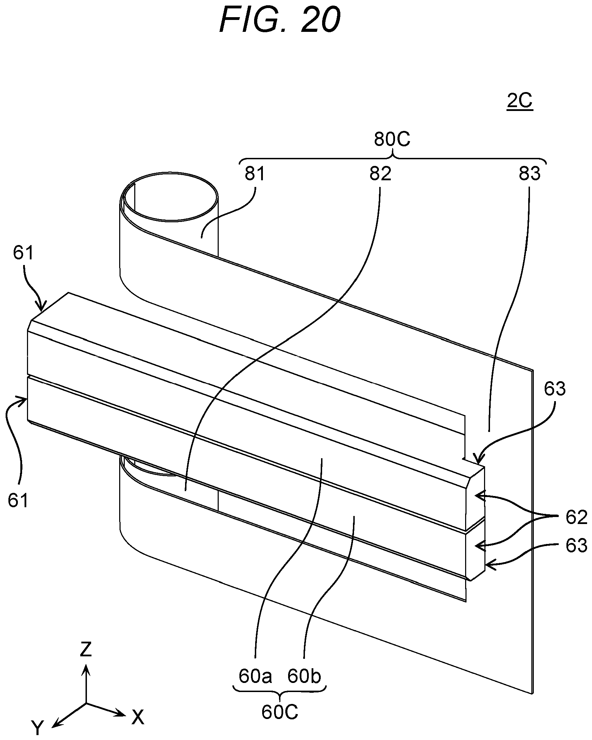

For example, in the first and second exemplary embodiments, constant load spring 80 is arranged in a posture (horizontal posture) in which a direction in which first spiral portion 81 and second spiral portion 82 are arranged is parallel to an XY plane. However, the present disclosure is not limited thereto. Fig. 20 is a diagram illustrating an arrangement example of brush 60C and constant load spring 80C in electric motor 2C according to a modification. Specifically, as in electric motor 2C illustrated in Fig. 20, constant load spring 80C may be arranged in a posture (vertical posture) in which a direction in which first spiral portion 81 and second spiral portion 82 are arranged is parallel to a Z-axis direction. In this case, as in brush 60C illustrated in Fig. 20, first brush 60a and second brush 60b stacked in the Z-axis direction may be used. That is, a divided brush may be used as brush 60C.

In the first exemplary embodiment, coupling portion 83 of constant load spring 80 is formed integrally with the wire materials forming first spiral portion 81 and second spiral portion 82. However, the present disclosure is not limited thereto. For example, coupling portion 83 of constant load spring 80 may be a coupling member separate from the wire materials forming first spiral portion 81 and second spiral portion 82. In this case, the coupling member which is coupling portion 83 may not be the strip-shaped wire material. The same applies to the second exemplary embodiment.

In the above exemplary embodiment, stator 20 includes magnet 21. However, the present disclosure is not limited thereto. For example, stator 20 may include a stator core and a winding coil wound around the stator core.

In the above exemplary embodiment, a case where electric air blower 1 is used for a vacuum cleaner has been described. However, the present disclosure is not limited thereto. For example, electric air blower 1 may be used for a hand dryer and the like.

In the above exemplary embodiment, an example in which electric motor 2 is used for electric air blower 1 has been described. However, the present disclosure is not limited thereto, and electric motor 2 may be used for electric equipment other than electric air blower 1. Electric motor 2 is not limited to be used for household equipment. Electric motor 2 may be used for industrial equipment.

The present disclosure also includes an aspect obtained by applying various modifications conceived by those skilled in the art to the exemplary embodiments above, or an aspect achieved by appropriately combining components and functions in the exemplary embodiments within a range without departing from the gist of the present disclosure.

### INDUSTRIAL APPLICABILITY

The electric motor, the electric air blower, and the like of the present disclosure can be used in various electric equipment including home electric equipment such as a vacuum cleaner.

### REFERENCE MARKS IN THE DRAWINGS

1: electric air blower
2, 2A, 2B, 2C: electric motor
3: rotary fan
4: air guide
4a: main body
4b: ring shape part
4c: coupling plate
5: fan case
5a: lid portion
5b: side wall portion
5c: inlet port
10: rotor
11: rotor core
12: winding coil
13: rotating shaft
13a: first site
13b: second site
14: commutator
14a: commutator segment
15: first bearing
16: second bearing
20: stator
21: magnet
30: yoke
40: frame
40a: opening
40b: exhaust port
41: bulge
50: bracket
51: first through hole
52: second through hole
60, 60B, 60C: brush
60a: first brush
60b: second brush
61: front end surface
62: rear end surface
63: recess
70: brush holder
71: brush accommodation portion
72: slit
72a: first slit
72b: second slit
73: protrusion
80, 80A, 80B, 80C: constant load spring
81: first spiral portion
82: second spiral portion
83, 83A, 83B: coupling portion
84, 84B: bent segment
84a: first bent segment
84b: second bent segment
90: pigtail wire

## Claims

1. An electric motor comprising:
a rotor including a rotating shaft extending in an axial direction;
a commutator that is attached to the rotating shaft;
a brush that comes into contact with the commutator; and
a brush spring that presses the brush against the commutator,
wherein the brush spring includes a first spiral portion and a second spiral portion, each of the first spiral portion and the second spiral portion being made of a plate material having a strip shape wound in a spiral shape, and a coupling portion that couples a wire material having a strip shape forming the first spiral portion and a wire material having a strip shape forming the second spiral portion, and
the brush is pressed against the commutator by a load from the coupling portion.

2. The electric motor according to Claim 1, wherein
the brush has a front end surface coming into contact with the commutator and a rear end surface positioned on a side opposite to the front end surface, and
the coupling portion comes into contact with the rear end surface of the brush.

3. The electric motor according to Claim 2, wherein an end surface of a wire material having a strip shape forming the coupling portion abuts on the rear end surface of the brush.

4. The electric motor according to Claim 2 or 3, wherein
a recess is formed on the rear end surface of the brush, and
at least a part of the coupling portion is inserted into the recess.

5. The electric motor according to any one of Claims 1 to 3, wherein
the first spiral portion and the second spiral portion are arranged to sandwich a front end of the brush,
the strip-shaped wire material forming the first spiral portion is drawn out along one side surface of the brush, and
the strip-shaped wire material forming the second spiral portion is drawn out along an other side surface of the brush.

6. The electric motor according to any one of Claims 1 to 3, further comprising
a brush holder including a brush accommodation portion that accommodates the brush,
wherein slits extending along a longitudinal direction of the brush are formed on both side surfaces of the brush accommodation portion, and
the coupling portion protrudes from the slits.

7. The electric motor according to Claim 6, wherein the first spiral portion and the second spiral portion are arranged to sandwich the brush accommodation portion.

8. The electric motor according to Claim 6, wherein the first spiral portion and the second spiral portion are fixed to the brush holder.

9. The electric motor according to Claim 2 or 3, wherein
the coupling portion includes a bent segment formed by bending a part of the strip-shaped wire material forming the coupling portion, and
the bent segment is in surface contact with the rear end surface of the brush.

10. The electric motor according to Claim 9, wherein
a plurality of the bent segments are provided, and
the plurality of bent segments include a first bent segment and a second bent segment which are bent in opposite directions to each other in a height direction of the brush.

11. The electric motor according to Claim 9, wherein the bent segment is formed by bending the coupling portion only in one direction.

12. The electric motor according to Claim 11, wherein the coupling portion is shifted from a center of the brush in a height direction.

13. The electric motor according to Claim 1 to 3, wherein the strip-shaped wire material forming the first spiral portion, the strip-shaped wire material forming the second spiral portion, and the strip-shaped wire material forming the coupling portion are integrated.
